(19)

**Europäisches Patentamt**
**European Patent Office**
**Office européen des brevets**

(11)  **EP 3 149 826 B1**

(12)  **EUROPÄISCHE PATENTSCHRIFT**

(45) Veröffentlichungstag und Bekanntmachung des Hinweises auf die Patenterteilung:
**29.08.2018  Patentblatt 2018/35**

(21) Anmeldenummer: **15728436.5**

(22) Anmeldetag: **26.05.2015**

(51) Int Cl.:
*H02J 3/32* *(2006.01)*

(86) Internationale Anmeldenummer:
**PCT/EP2015/061555**

(87) Internationale Veröffentlichungsnummer:
**WO 2015/181147 (03.12.2015 Gazette 2015/48)**

(54) **VERFAHREN UND VORRICHTUNG ZUM BETRIEB EINES ELEKTRISCHEN ENERGIESPEICHERSYSTEMS**

METHOD AND DEVICE FOR OPERATING AN ELECTRIC ENERGY STORAGE SYSTEM

PROCÉDÉ ET DISPOSITIF POUR FAIRE FONCTIONNER UN SYSTÈME D'ACCUMULATION D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.05.2014  DE 102014210010**

(43) Veröffentlichungstag der Anmeldung:
**05.04.2017  Patentblatt 2017/14**

(73) Patentinhaber: **Younicos GmbH**
**12489 Berlin (DE)**

(72) Erfinder:
  • **TRIEBEL, Clemens**
    **10243 Berlin (DE)**
  • **REINICKE-COLLON, Carsten**
    **10439 Berlin (DE)**
  • **BERNINGER, Udo**
    **12435 Berlin (DE)**

  • **TRÖNDLE, Tim**
    **10245 Berlin (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
EP-A1- 1 517 021          WO-A1-2006/072576
US-A1- 2012 323 386       US-A1- 2013 110 300

  • DUONG TRAN ET AL: "Energy management and dynamic control in Composite Energy Storage System for micro-grid applications", IECON 2010 - 36TH ANNUAL CONFERENCE ON IEEE INDUSTRIAL ELECTRONICS SOCIETY, IEEE, PISCATAWAY, NJ, USA, 7. November 2010 (2010-11-07), Seiten 1818-1824, XP031840463, ISBN: 978-1-4244-5225-5

EP 3 149 826 B1

**Beschreibung**

Die Erfindung betrifft ein Verfahren zum Betrieb eines elektrischen Energiespeichersystems gemäß dem Oberbegriff des Patentanspruchs 1 sowie eine Vorrichtung zur Durchführung des Verfahrens gemäß Patentanspruch 16.

Zur Abdeckung von Spitzenlasten und zur Regelung der Netzspannung und Netzfrequenz elektrischer Energieversorgungsnetze werden neben konventionellen Kraftwerken auch Energiespeichersysteme in Form von Batteriespeicherkraftwerken im Megawattbereich eingesetzt, die sich insbesondere durch Schnelligkeit und gute Regelbarkeit auszeichnen und daher zunehmend zur Solleistungs- bzw. Wirk- und Blindleistungsregelung eingesetzt werden. Zu diesem Zweck ist es aber erforderlich, dass sich das Energiespeichersystem weitestgehend in einem optimalen Energieniveau bzw. Ladezustand befindet, der sowohl die Aufnahme elektrischer Leistung aus dem elektrischen Energieversorgungsnetz als auch die Abgabe elektrischer Leistung an das elektrische Energieversorgungsnetz sicherstellt. Dabei wird das Energieniveau des netzgekoppelten, aus mehreren elektrisch an einem gemeinsamen Kopplungspunkt miteinander verbundenen, elektrochemischen Energiespeichereinheiten durch die über die Zeit erbrachte Solleistung am gemeinsamen Kopplungspunkt und den Gesamtwirkungsgrad des Energiespeichersystems bestimmt.

Insbesondere in Anwendungen, bei denen die geforderte Solleistung nicht im Voraus bestimmt werden kann - wie es z. B. bei Netzdienstleistungen der Fall ist, bei denen auf eine bestimmte Netzkenngröße wie die Frequenz geregelt wird - kann diese über die Zeit erbrachte Leistung das Energieniveau über vorgegebene Grenzniveaus hinaustreiben und in extremen Fällen dazu führen, dass die Solleistung nicht mehr erbracht werden kann.

Ein als Batteriespeicherkraftwerk ausgebildetes Energiespeichersystem besteht üblicherweise aus mehreren Speichereinheiten bzw. Batteriemodulen mit einer Vielzahl parallel- und/oder in Reihe geschalteten elektrochemischen Speicherelementen in Form von Gleichspannungsbatterien bzw. Akkumulatoren, die durch die Verwendung bestimmter Speichertechnologien jeweils die gleichen chemischen und/oder physikalischen Eigenschaften aufweisen, die zum optimalen Betrieb vorgegebene Ladezustandsbereiche, Betriebstemperaturen und Be- und Entladezyklen erfordern.

Ein weiteres Kriterium beim Einsatz der Speichereinheiten sind die Kosten und die Lebenserwartung der in den Speichereinheiten verwendeten Speicherelemente und leistungselektronischen Komponenten wie Wechselrichter, Hochsetzsteller, Umrichter und dergleichen, wobei die Lebenserwartung unter anderem auch von der Anzahl der Lade- und Entladezyklen abhängt.

Aufgabe der vorliegenden Erfindung ist es, ein Verfahren zum Betrieb eines elektrischen Energiespeichersystems der eingangs genannten Art anzugeben, mit dem das gesamte Energieniveau des aus mehreren Speichereinheiten bestehenden Energiespeichersystems so eingestellt wird, dass jederzeit und über eine vorgegebene Zeitspanne die Erbringung von Solleistung, d. h. die Aufnahme elektrischer Leistung aus dem Energieversorgungsnetz oder die Abgabe elektrischer Leistung an das Energieversorgungsnetz, gewährleistet ist und das Energieniveau der einzelnen Speichereinheiten in Bezug auf Anschaffungs- und Betriebskosten sowie eine lange Lebensdauer bzw. den Erhalt einer maximalen Speicherkapazität optimiert wird.

Diese Aufgabe wird erfindungsgemäß durch ein Verfahren mit den Merkmalen des Anspruchs 1 gelöst.

Die erfindungsgemäße Lösung gewährleistet durch die gezielte, dynamische Adaption des Gesamtwirkungsgrades des Energiespeichersystems jederzeit und über eine vorgegebene Zeitspanne die Erbringung von Solleistung und eine optimale Einstellung des Energieniveaus der einzelnen Speichereinheiten des Energiespeichersystems in Bezug auf Anschaffungs- und Betriebskosten sowie eine lange Lebensdauer bzw. den Erhalt einer maximalen Speicherkapazität.

Die gezielte, dynamische Adaption des Gesamtwirkungsgrades wird durch eine vom aktuellen Energieniveau des Energiespeichersystems abhängige Verteilung der Solleistung auf die einzelnen Energiespeicher realisiert, damit die Solleistung am gemeinsamen Kopplungspunkt erfüllt und das Gesamtenergieniveau des Energiespeichersystems auf einen optimalen Wert eingestellt wird.

Dementsprechend wird die sowohl die Wirk- als auch die Blindleistung umfassende Schein- oder Solleistung in Abhängigkeit vom Gesamtenergieniveau des Energiespeichersystems, von der (positiven oder negativen) Solleistung und vom Wirkungsgrad sowie von charakteristischen Eigenschaften der Speichereinheiten bzw. von der Energiespeicher-Technologie derart auf die Speichereinheiten verteilt, dass

- das Gesamtenergieniveau des Energiespeichersystems innerhalb des energetisch verfügbaren Bereichs optimal eingestellt wird, so dass es minimale Werte nicht unterschreitet und maximale Werte nicht überschreitet und
- die Energieniveaus der einzelnen Speichereinheiten dahingehend optimiert werden, dass bezüglich der charakteristischen Eigenschaften der Speichereinheiten ungünstige Energieniveaus vermieden werden.

Die gezielte, dynamische Adaption des Gesamtwirkungsgrades bietet einen Freiheitsgrad zur Steuerung des Energieniveaus im Rahmen der über die Zeit zu erbringenden Solleistung des Energiespeichersystems. Ungünstige Energieniveaus des Energiespeichersystems und der einzelnen Speichereinheiten des Energiespeichersystems können dadurch vermieden oder zumindest zeitlich hinausgezögert werden.

Zur Einstellung des Gesamtenergieniveaus des Energiespeichersystems in Abhängigkeit von der energetischen Verfügbarkeit elektrischer Leistung aus dem Energieversorgungsnetz, an das das Energiespeichersystem angeschlossen ist, sowie zur Steuerung der Energieniveaus der einzelnen Speichereinheiten werden erfindungsgemäß verschiedene Strategien bzw. Steuerungsverfahren eingesetzt.

Eine erste Strategie besteht darin, die Sollleistung auf die Speichereinheiten in Abhängigkeit vom Gesamtenergieniveau des Energiespeichersystems, der Sollleistung, dem Wirkungsgrad und den charakteristischen Eigenschaften der Speichereinheiten sowie unter Berücksichtigung der Kosten der leistungselektronischen Komponenten und Speicherelemente der Speichereinheiten und/oder der Lebensdauererwartung der leistungselektronischen Komponenten und Speicherelemente der Speichereinheiten zu verteilen.

Bei der Verteilung der Sollleistung auf die Speichereinheiten ist sicherzustellen, dass

- das Energieniveau des Energiespeichersystems innerhalb des energetisch verfügbaren Bereichs minimale Werte nicht unterschreitet und maximale Werte nicht überschreitet und
- bezüglich der charakteristischen Eigenschaften der Speichereinheiten ungünstige Energieniveaus der Speichereinheiten vermieden werden.

Bei einer üblichen Vorgabe

- des vom Energieversorgungsnetz zur Verfügung gestellten energetisch verfügbaren Bereichs,
- der Topologie der Speichereinheiten und der Speichertechnologie der Speicherelemente der Speichereinheiten und
- der Kosten der leistungselektronischen Komponenten und Speicherelemente der Speichereinheiten

wird vorzugsweise

- eine vom momentanen Gesamtenergieniveau des Energiespeichersystems und
- eine die Lebensdauererwartung der leistungselektronischen Komponenten und Speicherelemente der Speichereinheiten

optimierende Strategie bei der Verteilung der Sollleistung auf die Speichereinheiten gewählt.

Die vorstehenden Vorgaben können dadurch realisiert werden, dass die Sollleistung auf N Speichereinheiten durch eine Vorgabe absoluter, von den N Speichereinheiten zu erbringender Leistungsanteile $P_N$ der Sollleistung $P_{soll}$ derart verteilt wird, dass die Summe aller absoluten Leistungsanteile $P_N$ der Speichereinheiten gleich der Sollleistung $P_{soll}$ ist entsprechend

$$P_{soll} = \sum_N P_N$$

Alternativ kann die Sollleistung $P_{soll}$ auf N Speichereinheiten durch eine Vorgabe relativer Beteiligungsfaktoren $\lambda_1$ bis $\lambda_N$ für die Speichereinheiten entsprechend

$$P_{soll} = \sum_N \lambda_N * P_{soll}$$

verteilt werden, wobei die Beteiligungsfaktoren $\lambda_1$ bis $\lambda_N$ positiv oder negativ sind und die Summe aller Beteiligungsfaktoren $\lambda_1$ bis $\lambda_N$

$$\sum_N \lambda_N = 1$$

ist.

Zusätzlich oder in weiterer Alternative kann die Sollleistung $P_{soll}$ auf die N Speichereinheiten derart verteilt werden, dass die im Energiespeichersystem auftretenden Verluste bei niedrigem Gesamtenergieniveau des Energiespeichersystems verringert und bei hohem Gesamtenergieniveau des Energiespeichersystems erhöht werden.

Vorteilhafte, praxisgerechte Ausführungsformen von Strategien zur Optimierung der Verteilung der Sollleistung auf die Speichereinheiten sowie zur Reduzierung bzw. Erhöhung des Leistungsverbrauchs bei niedrigem oder hohem Gesamtenergieniveau des Energiespeichersystems sind den Merkmalen der Patentansprüche 9 bis 15 zu entnehmen und werden nachfolgend anhand der in der Zeichnung dargestellten Ausführungsbeispiele näher beschrieben und erläutert.

Eine vorteilhafte Vorrichtung zur Durchführung der erfindungsgemäßen Verfahren ist dadurch gekennzeichnet, dass das Energiespeichersystem mindestens zwei Speichereinheiten aufweist, wobei jede Speichereinheit

- zumindest gruppenweise zusammengefasst gleiche chemische und/oder physikalische Eigenschaften aufweisende Speicherelemente,
- ein die Speicherelemente steuerndes und überwachendes Speicherelement-Managementsystem,
- ein die Speichereinheiten steuerndes und überwachendes Speichereinheiten-Managementsystem,
- ein Leistungselektronikmodul und
- eine Leistungselektronikmodul-Regeleinrichtung

enthält und dass die Speicherelement-Managementsysteme der Speichereinheiten mit einem die Bereitstellung der Sollleistung am Kopplungspunkt und den Gesamtwirkungsgrad des Energiespeichersystem steuernden

und überwachenden übergeordneten Energiespeichersystem-Management verbunden sind. Eine vorteilhafte Ausgestaltung der Vorrichtung zur Durchführung des erfindungsgemäßen Verfahrens ist Gegenstand des Patentanspruchs 17. Anhand der in den Figuren der Zeichnung dargestellten Ausführungsbeispiele sollen das Zusammenwirken verschiedener Topologien von Speichereinheiten und der in den Speichereinheiten verwendeten Batterietechnologien sowie die Auswirkungen verschiedener Strategien und Steuerungsverfahren zur Einstellung des Gesamtenergieniveaus des Energiespeichersystems und zur Optimierung der Energieniveaus der einzelnen Speichereinheiten näher erläutert werden. Es zeigen:

Fig. 1      ein vereinfachtes Blockschaltbild eines Energiespeichersystems mit mehreren an einem Kopplungspunkt miteinander verbundenen, von einer zentralen Steuereinrichtung gesteuerten Speichereinheiten;

Fig. 2      ein detailliertes Blockschaltbild eines Energiespeichersystems mit mehreren Speichereinheiten unterschiedlicher Topologie und Batterietechnologien;

Fig. 3      eine schematische Darstellung des vom Gesamtenergieniveau abhängigen Wirkungsgrades des Energiespeichersystems mit minimierten bzw. maximierten Verlusten in einzelnen Energieniveau-Bereichen;

Fig. 4      eine schematische Darstellung des vom Gesamtenergieniveau des Energiespeichersystems abhängigen Wirkungsgrades mit in einzelnen Energieniveau-Bereichen minimierten bzw. maximierten Verlusten und zwischen diesen Bereichen graduell angepassten Verlusten,

Fig. 5      eine schematische Darstellung der Verlustleistung über der vom Energiespeichersystem zu erbringenden Sollleistung;

Fig. 6      ein den zeitlichen Verlauf des Ladezustands des Energiespeichersystems und der Speichereinheiten über eine längere Zeitspanne wiedergebendes Diagramm und

Fig. 7      ein dem Diagramm gemäß Fig. 6 entsprechendes Leistungsprofil des Energiespeichersystems.

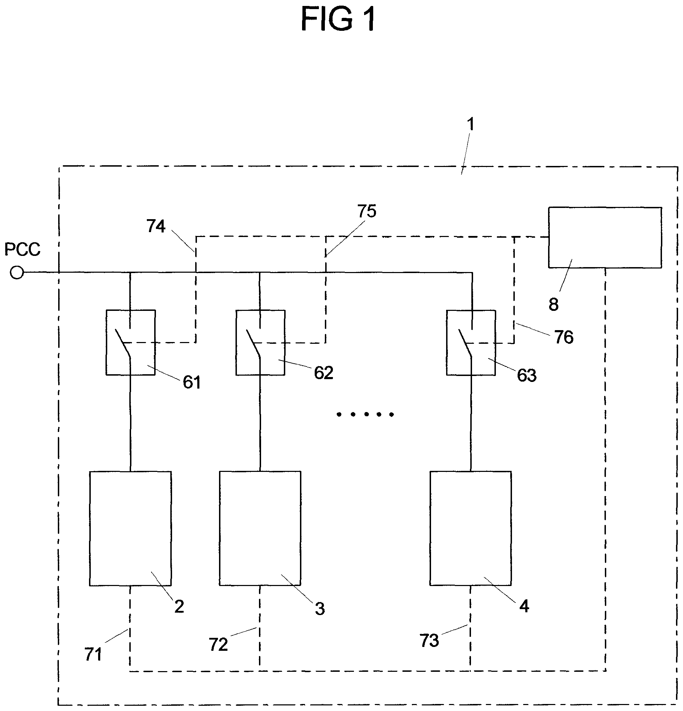

Fig. 1 zeigt ein schematisches Blockschaltbild eines Energiespeichersystems 1 mit N Speichereinheiten 2, 3, 4, die mittels durchgezogen dargestellter elektrischer Leitungen über Leistungsschalter 61, 62, 63 mit einem gemeinsamen Kopplungspunkt PCC und über gestrichelt dargestellte Kommunikationsleitungen 71, 72, 73 mit einer zentralen Steuereinrichtung in Form eines Energiespeichersystem-Management 8 verbunden sind, das die Leistungsschalter 61, 62, 63 über Steuerleitungen 74, 75, 76 ansteuert. Die N Speichereinheiten 2, 3, 4 enthalten Leistungselektronikmodule in Form von Wechselrichtern, Umrichtern oder Hochsetzstellern, wobei die Topologie der Leistungselektronikmodule der einzelnen N Speichereinheiten 2, 3, 4 übereinstimmen oder voneinander abweichen kann, sowie Speicherelemente, deren Speichertechnologie von Speichereinheit zu Speichereinheit variieren kann, innerhalb einer Speichereinheit aber im Allgemeinen übereinstimmt. Lediglich Speichereinheiten 2, 3, 4 mit gruppenweise zusammengefassten Speicherelementen gleicher Speichertechnologie können auch unterschiedliche Speichertechnologien bei entsprechend angepasster Topologie der Leistungselektronikmodule einsetzen.

Somit bilden die einzelnen Speichereinheiten 2, 3, 4 ein hybrides Energiespeichersystem, dessen einzelne Speichereinheiten 2, 3, 4 untereinander gleiche oder unterschiedliche elektrische Eigenschaften aufweisen. Das aus den parallel geschalteten Speichereinheiten 2, 3, 4 gebildete Energiespeichersystem 1 erbringt am gemeinsamen Kopplungspunkt PCC eine vorgegebene elektrische Sollleistung, die beispielsweise zum Austausch elektrischer Energie mit einem elektrischen Energieversorgungsnetz, beispielsweise zur Abdeckung von Spitzenlasten oder zur Primärregelung eines elektrischen Energieversorgungsnetzes bereitgestellt wird.

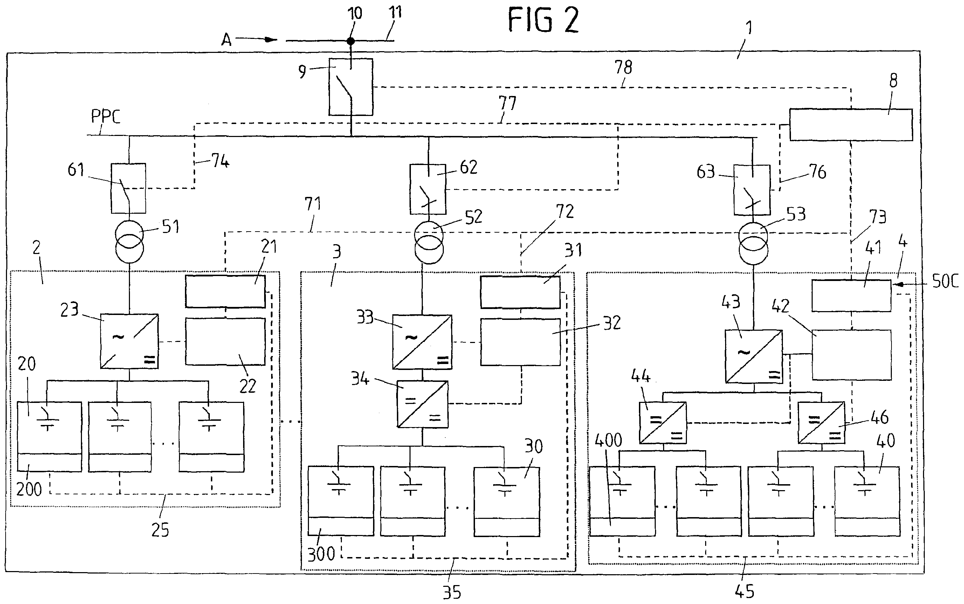

Fig. 2 zeigt ein detailliertes Blockschaltbild eines Energiespeichersystems 1 mit Speichereinheiten 2, 3, 4 mit unterschiedlicher Topologie der Leistungselektronikmodule, d. h. der Wechselrichter oder Umrichter bzw. Hochsetzsteller, und gegebenenfalls unterschiedlicher Speichertechnologien, wobei die elektrischen Leitungen in ausgezogenen Linien und die Kommunikationsverbindungen bzw. Steuerleitungen in gestrichelten Linien dargestellt sind.

Das Energiespeichersystems 1 ist an einen Netzanschlusspunkt 10 eines Energieversorgungsnetzes 11 angeschlossen und enthält drei parallelgeschaltete Speichereinheiten 2, 3, 4, die jeweils über einen Transformator 51, 52, 53, einen Leistungsschalter 61, 62, 63 und einen gemeinsamen Netzanschluss-Leistungsschalter 9 mit dem Netzanschlusspunkt 10 des Energieversorgungsnetzes 11 verbunden sind. Die Speichereinheiten 2, 3, 4 weisen mehrere parallel geschaltete Speicherelemente 20, 30, 40 auf, von denen jedes Speicherelement 20, 30, 40 mehrere in Reihe geschaltete Batterien bzw. Akkumulatoren umfassen kann. Jedes der Speicherelemente 20, 30, 40 weist ein Speicherelement-Managementsystem 200, 300, 400 auf, das mit einem Speichereinheit-Managementsystem 21, 31, 41 für jede Speichereinheit 2, 3, 4 verbunden ist.

Die Speicherelement-Managementsysteme 200, 300, 400 überwachen die Speicherelemente 20, 30, 40 und stellen eine Kommunikationsschnittstelle zu den Speichereinheit-Managementsystemen 21, 31, 41 bereit. Die Speichereinheit-Managementsysteme 21, 31, 41 sind mit dem übergeordneten Energiespeichersystem-Management 8 verbunden, das die Leistungsschalter 61, 62, 63 der einzelnen Speichereinheiten 2, 3, 4 und den Netzanschluss-Leistungsschalter 9 ansteuert und Steuersignale mit den Speichereinheit-Managementsystemen 21, 31, 41 austauscht.

Die erste Speichereinheit 2 enthält mehrere, parallelgeschaltete Speicherelemente 20, die zur Bereitstellung einer höheren Spannung aus einer Reihenschaltung mehrerer Batterien bestehen können und mit jeweils einem Speicherelement-Managementsystem 200 versehen sind. Die Speicherelemente 20 sind an einen Wechselrichter 23 angeschlossen, der mit einem ersten Transformator 51 verbunden ist.

Die zweite Speichereinheit 3 enthält mehrere parallelgeschaltete, mit Speicherelement-Managementsystemen 300 versehene Speicherelemente 30, die an einen Hochsetzsteller 34 angeschlossen sind, der mit einem an einen zweiten Transformator 52 angeschlossenen Wechselrichter 33 verbunden ist.

Die dritte Speichereinheit 4 enthält mehrere gruppenweise zusammengefasste, parallel geschaltete und mit einem Speicherelement-Managementsystem 400 versehen Speicherelemente 40, die über einen, jeweils einer der Gruppen zugeordneten Hochsetzsteller 44, 45 mit einem Wechselrichter 43 verbunden sind, der an einen dritten Transformator 53 angeschlossen ist. Die Speicherelemente 40 der dritten Speichereinheit 4 können unterschiedliche Speichertechnologien in den beiden Speicherelement-Gruppen aufweisen, die an den einen oder den anderen Hochsetzsteller 44, 45 angeschlossen sind.

Die Speicherelement-Managementsysteme 200, 300, 400 der Speichereinheiten 2, 3, 4 sind über Kommunikationsleitungen 25, 35, 45 mit den Speichereinheit-Managementsystemen 21, 31, 41 verbunden, an die Leistungselektronikregler 22, 32, 42 angeschlossen sind, die den jeweiligen Wechselrichter 23, 33, 43 und/oder Hochsetzsteller 34, 44, 45 der Speichereinheiten 2, 3, 4 ansteuern.

Die Speichereinheit-Managementsysteme 21, 31, 41 optimieren den Einsatz der Teilkomponenten der Speichereinheiten 2, 3, 4 und ermöglichen u.a. eine Wartung der Teilkomponenten im laufenden Betrieb. Das übergeordnete Energiespeichersystem-Management 8 regelt das Zusammenspiel der Speichereinheiten 2, 3, 4, koordiniert und steuert die Wartungsanforderungen der Speichereinheiten 2, 3, 4 und verteilt die Anforderungen an das Energiespeichersystem 1 auf die einzelnen Speichereinheiten 2, 3, 4 sowohl zur Steuerung des Gesamtwirkungsgrades bzw. Gesamtenergieniveaus des Energiespeichersystems 1 als auch zur Steuerung des Einzelwirkungsgrades bzw. der Energieniveaus der Speichereinheiten 2, 3, 4 zur Optimierung des Gesamtenergieniveaus des Energiespeichersystems 1 und der Energieniveaus der einzelnen Speichereinheiten 2, 3, 4.

Das übergeordnete Energiespeichersystem-Management 8 stellt die zentrale Steuerungsebene des Energiespeichersystems 1 dar, indem es die von den Speichereinheiten 2, 3, 4 zur Verfügung gestellten Informationen unter anderem bezüglich des Energieniveaus bzw. des Ladezustands der Speichereinheiten 2, 3, 4 zusammenführt, um in Abhängigkeit von den seitens des Energieversorgungsnetzes 11 gestellten und vom Energiespeichersystem 1 zu erfüllenden Anforderungen bezüglich der Sollleistung die Arbeitspunktvorgaben für die einzelnen Speichereinheiten 2, 3, 4 zu optimieren.

Die Speichereinheiten 2, 3, 4 des Energiespeichersystems 1 können

- jeweils eine unterschiedliche Topologie der Leistungselektronikmodule 23, 33, 43; 34, 44, 46 und eine unterschiedliche Technologie der elektrochemischen Speicherelemente 20, 30, 40,

- eine übereinstimmende Topologie der Leistungselektronikmodule 23, 33, 43; 34, 44, 46 bei unterschiedlicher Technologie der elektrochemischen Speicherelemente 20, 30, 40,

- eine teilweise übereinstimmende Topologie der Leistungselektronikmodule 23, 33, 43; 34, 44, 46 bei teilweise unterschiedlicher Technologie der elektrochemischen Speicherelemente 20, 30, 40 oder

- eine übereinstimmende Topologie der Leistungselektronikmodule 23, 33, 43; 34, 44, 46 und übereinstimmende Technologie der elektrochemischen Speicherelemente 20, 30, 40

aufweisen, wobei die Art und Konfiguration der einzelnen Speichereinheiten 2, 3, 4 sowohl aus wirtschaftlichen Gründen erfolgen kann, weil beispielsweise elektrochemische Speicherelemente 20, 30, 40 der einen Art billiger sind als Speicherelemente 20, 30, 40 anderer Art, als auch aus technischen Gründen, weil beispielsweise Speicherelemente 20, 30, 40 unterschiedlicher Speichertechnologie mit unterschiedlichen chemischen und/oder physikalischen Eigenschaften eingesetzt werden können.

So weisen beispielsweise Lithium-Ionen-Batterien eine hohe Energiedichte von 120 bis 210 Wh/kg und zur raumsparenden Anordnung eine hohe volumetrische Energiedichte von 500 Wh/l, d.h. ein sehr hohes Verhältnis von Leistung zu Energie mit einer c-Rate 1 und höher auf und eignen sich daher besonders als Kurzzeitspeicher und für den Ausgleich großer, kurzfristiger Schwankungen durch Bereitstellung von Regelleistung. Für eine hohe Lebensdauer erfordern Lithium-Ionen-Batterien aber eine Umgebungs- oder Betriebstemperatur von ca. 15°C bei einem Ladezustand von 40 bis 80 % der Vollladung.

Natrium-Schwefel-Batterien weisen dagegen bei einer Energiedichte von 120 bis 220 Wh/kg eine sehr hohe Speicherkapazität mit einer c-Rate von 1/6 auf, so dass sie sich insbesondere zum Ausgleich täglicher Schwankungen von Wind- und Sonnenenergie eignen, erfordern aber als Hochtemperaturbatterien eine Betriebstemperatur von 300 C, die Heizverluste von 15 bis 30 % bedingt.

Speicherelemente auf der Basis von Vanadium-Redox-Flow weisen fast keine Selbstentladung auf, so dass sie sich unter anderem hervorragend als Saisonalspeicherelemente eignen. Da zudem Vanadium-Redox-Flow-Batterien nicht altern oder verschleißen, sind sie bei geringem Wartungsaufwand nahezu unbegrenzt haltbar und je nach Anforderung können Leistung und Energie getrennt und flexibel skaliert werden.

Da die genauen Anforderungen an ein Speicherelement je nach Anwendungsfall und teilweise auch projektspezifisch variieren können, was viele Eigenschaften, besonders aber das Verhältnis von Leistung und Energie betrifft, werden bei Bedarf unterschiedliche Technologien in einer hybriden Speichereinheit kombiniert, so dass die Vorteile der unterschiedlichen Technologien innerhalb einer Speichereinheit genutzt werden können.

Zur optimalen Einstellung des Gesamtenergieniveau des Energiespeichersystems 1 innerhalb des energetisch verfügbaren Bereichs sowie zur optimalen Einstellung des Energieniveaus der einzelnen Speichereinheiten 2, 3, 4 zur Vermeidung ungünstiger Energieniveaus der einzelnen Speichereinheiten 2, 3, 4 wird die am Netzanschlusspunkt 10 des Energieversorgungsnetzes 11 bereit zu stellende Sollleistung $P_{soll}$ durch eine Vorgabe absoluter Leistungsanteile $P_N$ auf die einzelnen Speichereinheiten 2, 3, 4 verteilt, so dass die Summe aller absoluten Leistungsanteile $P_N$ der N Speichereinheiten 2, 3, 4 gleich der bereit zu stellenden Sollleistung $P_{soll}$ des Energiespeichersystems 1 ist:

$$P_{soll} = \sum_N P_N$$

Alternativ kann die am Netzanschlusspunkt 10 des Energieversorgungsnetzes 11 bereit zu stellende Sollleistung $P_{soll}$ durch die Vorgabe relativer Beteiligungsfaktoren $\lambda_N$ für die N Speichereinheiten 2, 3, 4 entsprechend

$$P_{soll} = \sum_N \lambda_N * P_{soll}$$

Auf die N Speichereinheiten 2, 3, 4 verteilt werden, wobei die Beteiligungsfaktoren $\lambda_N$ positiv oder negativ sind und die Summe aller Beteiligungsfaktoren

$$\sum_N \lambda_N = 1$$

beträgt

Das Energieniveau des Energiespeichersystems 1, d.h. die insgesamt in den Speichereinheiten 2, 3, 4 gespeicherte elektrische Energie, hängt von der aus dem elektrischen Energieversorgungsnetz 11 aufgenommenen bzw. über den Netzanschlusspunkt 10 an das elektrische Energieversorgungsnetz 11 abgegebenen elektrischen Leistung und dem Gesamtwirkungsgrad des Energiespeichersystems 1 ab.

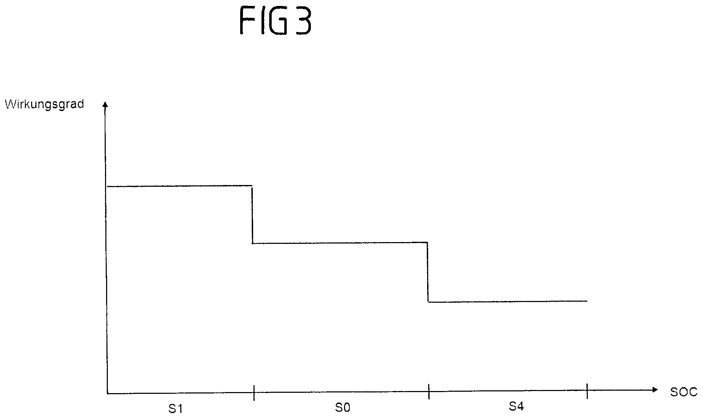

Um zu verhindern, dass die über eine bestimmte Zeitdauer erbrachte Sollleistung $P_{soll}$, d.h. die jeweils aufgenommene oder abgegebene Wirk- und Blindleistung, das Energieniveau des Energiespeichersystems 1 über vorgegebene Grenzniveaus hinaus verändert, was im Extremfall dazu führt, dass das Energiespeichersystem 1 die geforderte Sollleistung $P_{soll}$ nicht mehr erbringen kann, wird der Gesamtwirkungsgrad des Energiespeichersystems 1 im energetisch verfügbaren Rahmen zur Vermeidung ungünstiger Energieniveaus sowohl bezüglich des Gesamtenergieniveaus des Energiespeichersystems 1 als auch bezüglich der Energieniveaus der einzelnen N Speichereinheiten 2, 3, 4 dynamisch angepasst. Dies soll anhand der in den Fig. 3 bis 5 schematisch dargestellten Grafiken näher erläutert werden.

Prinzipiell verteilt das Energiespeichersystem-Management 8 die am Netzanschlusspunkt 10 des Energieversorgungsnetzes 11 bereit zu stellende Sollleistung $P_{soll}$ durch entsprechende Ansteuerung der Speichereinheit-Managementsysteme 21, 31, 41 derart auf die Speichereinheiten 2, 3, 4, dass die im Energiespeichersystem 1 auftretenden Verluste bei niedrigem Gesamtenergieniveau des Energiespeichersystems 1 verringert und bei hohem Gesamtenergieniveau des Energiespeichersystems 1 erhöht werden.

Dazu wird gemäß der schematisch den Verlauf des Wirkungsgrades des Energiespeichersystems 1 über den Ladezustand SOC des Energiespeichersystems 1 darstellenden Fig. 3 zur Vermeidung extremer Energieniveaus der Gesamtbereich möglicher Energieniveaus des Energiespeichersystems 1 in drei Bereiche $S_1 < S_0 < S_4$ aufgeteilt. Der erste Bereich $S_0$ ist der angestrebte Bereich, der zweite Bereich $S_1$ ein Bereich niedrigen Gesamtenergieniveaus und der dritte Bereich $S_4$ ein Bereich hohen Gesamtenergieniveaus des Energiespeichersystems 1. Während im ersten Bereich $S_0$ der Gesamtwirkungsgrad des Energiespeichersystems 1 nicht beeinflusst wird, werden im zweiten Bereich $S_1$ die absoluten Leistungsanteile $P_N$ oder die Beteiligungsfaktoren $\lambda_1$ bis $\lambda_N$ der Speichereinheiten 2, 3, 4 dynamisch so angepasst, dass die Verluste des Energiespeichersystems 1 minimiert werden und dementsprechend der Gesamtwirkungsgrad des Energiespeichersystems 1 maximiert wird. Im dritten Bereich $S_4$ werden die absoluten Leistungsanteile $P_N$ oder die Beteiligungsfaktoren $\lambda_1$ bis $\lambda_N$ der Speichereinheiten 2, 3, 4 dynamisch so angepasst, dass die Verluste maximiert werden und dementsprechend der Gesamtwirkungsgrad des Energiespeichersystems 1 minimiert wird.

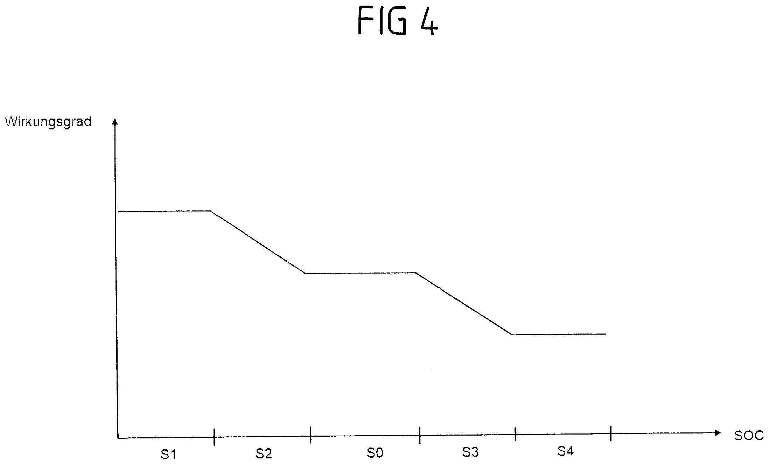

Um auf Abweichungen des Gesamtenergieniveaus des Energiespeichersystems 1 vom angestrebten Energieniveau schnell und mit stetigen Übergängen reagieren zu können, kann der Gesamtbereich möglicher Energieniveaus des Energiespeichersystems 1 gemäß Fig. 4 aber auch in fünf Bereiche $S_1 < S_2 < S_0 < S_3 < S_4$ aufgeteilt werden. Dabei ist der erste Bereich $S_0$ der angestrebte Bereich. $S_1$ ist ein zweiter Bereich niedrigen Gesamtenergieniveaus, in dem die Beteiligungsfaktoren $\lambda_1$ bis $\lambda_N$ dynamisch so angepasst werden, dass die Verluste des Energiespeichersystems 1 minimiert und der Gesamtwirkungsgrad des Energiespeichersystems 1 maximiert wird. $S_4$ ist ein dritter Bereich hohen Gesamtenergieniveaus des Energiespeichersystems 1, in dem die Beteiligungsfaktoren $\lambda_1$ bis $\lambda_N$ dynamisch so angepasst werden, dass die Verluste maximiert und der Gesamtwirkungsgrad des Energiespeichersystems 1 minimiert wird. Im vierten Bereich $S_2$ und fünften Bereich $S_3$ erfolgt ein gradueller Abfall des Gesamtwirkungsgrades.

Im Einzelnen werden hierzu verschiedene Strategien eingesetzt, die

a) vom energetisch verfügbaren Bereich, den das Energieversorgungsnetz 11 zur Verfügung stellt,
b) von der Topologie und Speichertechnologie der Speichereinheiten 2, 3, 4,
c) von den Kosten der einzelnen Leistungselektronikmodule 23, 33, 43; 34, 44, 46 und Speicherelemente 20, 30, 40,
d) vom momentanen Gesamtenergieniveau des Energiespeichersystems 1
e) von der Lebensdauererwartung der einzelnen Leistungselektronikmodule 23, 33, 43; 34, 44, 46 und Speicherelemente 20, 30, 40

abhängen.

Da die Parameter a) bis c) durch die Einstellung der Energieniveaus der Speichereinheiten 2, 3, 4 des Energiespeichersystems 1 nicht vom Energiespeichersystem-Management 8 beeinflussbar sind, hängt die jeweils eingesetzte Strategie von den Parametern d) und e), nämlich von dem Gesamtenergieniveau des Energiespeichersystems 1 unter Berücksichtigung der durch den energetisch verfügbaren Bereich gesetzten Grenzen und der vorgegebenen bzw. gewählten Topologie und Speichertechnologie der Speichereinheiten 2, 3, 4 und der Lebensdauererwartung der Einzelkomponenten ab.

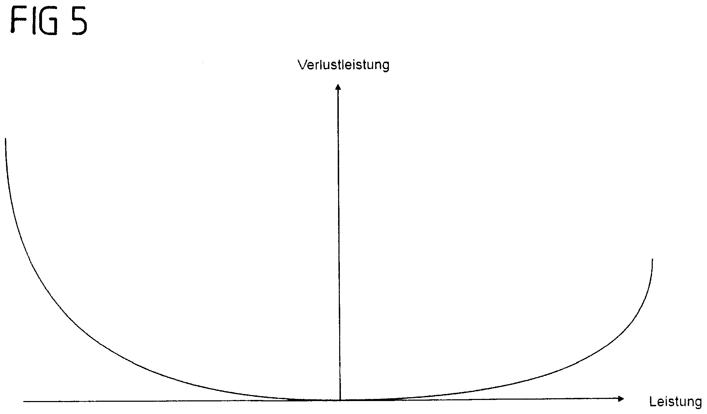

Zum Absenken eines hohen, über dem optimalen Bereich liegenden Gesamtenergieniveaus des Energiespeichersystems 1 werden gemäß Fig. 5 die Verluste innerhalb des Energiespeichersystems 1 erhöht, während sie bei einem niedrigen, unter dem optimalen Bereich liegenden Gesamtenergieniveau des Energiespeichersystems 1 verringert werden. Fig. 5 zeigt den Verlauf der Verlustleistung einer Speichereinheit über der von der Speichereinheit zu erbringenden Leistung und verdeutlicht die Verluste der Speichereinheiten bei steigender negativer Teilleistung, die bei aus dem Energieversorgungsnetz 11 aufzunehmender Leistung polynomial verläuft und bei über den Netzanschlusspunkt 10 an das elektrische Energieversorgungsnetz 11 abzugebender Teilleistung aufgrund der beim Entladen anfallenden Verlustleistungen ansteigt.

Zur Absenkung eines hohen Gesamtenergieniveaus des Energiespeichersystems 1 wird in einem ersten Schritt die Leistungsverteilung auf die Speichereinheiten 2, 3, 4 mittels der Beteiligungsfaktoren $\lambda_N$ zur Ansteuerung der Speichereinheit-Managementsysteme 21, 31, 41 so gewählt, dass die leistungsabhängigen Verluste im Gesamtsystem maximiert werden.

Als weitere Maßnahme wird durch eine entsprechende Ansteuerung der Speichereinheit-Managementsysteme 21, 31, 41 der Speichereinheiten 2, 3, 4 durch das Energiespeichersystem-Management 8 Energie zwischen den Speichereinheiten 2, 3, 4 des Energiespeichersystems 1 ausgetauscht bzw. verschoben, so dass die innerhalb des Energiespeichersystems 1 zwischen den Speichereinheiten 2, 3, 4 ausgetauschte Energie am gemeinsamen Kopplungspunkt der Speichereinheiten 2, 3, 4 zwar nicht messbar ist, die internen leistungsabhängigen Gesamtverluste des Energiespeichersystems 1 aber erhöht und damit der Gesamtwirkungsgrad des Energiespeichersystems 1 verringert wird. Hierbei weisen einzelne Beteiligungsfaktoren $\lambda_N$ der N Speichereinheiten 2, 3, 4 unterschiedliche Vorzeichen auf, es gilt aber weiterhin, dass die Summe aller Beteiligungsfaktoren :

$$\sum_N \lambda_N = 1$$

Ist.

Die Absenkung eines hohen Gesamtenergieniveaus durch einen Energieaustausch zwischen den einzelnen Speichereinheiten 2, 3, 4 des Energiespeichersystems 1 wird dadurch erzielt, dass beim Aufladen und Entladen von elektrochemischen Speicherelementen durch den inneren Widerstand der Speicherelemente-Zellen Wärme freigesetzt wird, wodurch ein Teil der zum Aufladen aufgewandten Energie verloren geht, so dass sowohl beim Laden als auch beim Entladen der Speichereinheiten 2, 3, 4 Verlustleistungen anfallen, die insgesamt die internen Gesamtverluste des Energiespeichersystems 1 erhöhen. Weiterhin weisen auch die Leistungselektronikmodule 23, 33, 43; 34, 44, 46 wie Hochsetzsteller, Umrichter und Transformatoren ein spezifisches, leistungsabhängiges Verlustverhalten auf.

Zur Ermittlung der optimalen Beteiligungsfaktoren $\lambda_N$ verwendet das Energiespeichersystem-Management 8 zur Berechnung der leistungsabhängigen Verluste spezielle LeistungsVerlust-Modelle der spezifischen Leistungselektronikmodule 23, 33, 43; 34, 44, 46 und der spezifischen Batterietechnologien der einzelnen Speichereinheiten 2, 3, 4.

Ein Austausch von Energie zwischen den einzelnen Speichereinheiten 2, 3, 4 mittels Ansteuerung der Speichereinheit-Managementsysteme 21, 31, 41 der Speichereinheiten 2, 3, 4 durch das Energiespeichersystem-Management 8 erfolgt auch dann, wenn sich das Energieniveau einer Speichereinheit 2, 3, 4 oder mehrer Speichereinheiten 2, 3, 4 in einem bezüglich der charakteristischen Eigenschaften der betreffenden Speichereinheiten 2, 3, 4 zu vermeidenden Bereich befindet oder sich diesem Bereich annähert. Dadurch ist eine hohe Lebensdauer bzw. der Erhalt einer hohen Speicherkapazität der Speichereinheiten 2, 3, 4 gewährleistet.

Hierbei verwendet das Energiespeichersystem-Management 8 spezifische Energieniveau-Alterungs-Modelle der einzelnen Speichereinheiten 2, 3, 4 zur Ermittlung der zu vermeidenden Energieniveaus. Neben einem rein statischen kalendarischen Energieniveau-Alterungs-Modell verwendet das Energiespeichersystem-Management 8 auch für einzelne Speichereinheiten komplexere und mehrschichtige Alterungs-Modelle, die eine kalendarische, leistungs-, temperatur- und energieniveauabhängige Alterung berücksichtigen.

Zur gezielten Beeinflussung des Gesamtwirkungsgrades des Energiespeichersystems 1 werden auch Komponenten der Speichereinheiten 2, 3, 4 und des gesamten Energiespeichersystems 1 wie Hilfsaggregate zur Heizung und Kühlung der Speicherelemente 20, 30, 40 und der Leistungselektronikmodule 23, 33, 43; 34, 44, 46 als steuerbare Lasten zur Erhöhung und Verringerung von Verlustleistungen einbezogen, um den Eigenbedarf des Energiespeichersystems 1 zu erhöhen und damit dessen Gesamtwirkungsgrad zu verringern bzw. um den Eigenbedarf des Energiespeichersystems 1 zu verringern und damit dessen Gesamtwirkungsgrad zu erhöhen.

Hierzu werden Modelle für die Leistungsregelung der verschiedenen spezifischen Hilfsaggregate vom Energiespeichersystem-Management 8 verwendet. Für die Optimierung der Kühl- oder Heizleistung verwendet das Energiespeichersystem-Management 8 wiederum Leistungs-Temperatur-Modelle der einzelnen Speichereinheiten 2, 3, 4, ihrer Leistungselektronikmodule 23, 33, 43; 34, 44, 46 und der daran angeschlossenen Speicherelemente 20, 30, 40. Weiterhin berücksichtigt das Energiespeichersystem-Management 8 bei dieser Leistungsregelung der verschiedenen spezifischen Hilfsaggregate die damit verbundene temperaturabhängige Alterung der einzelnen Speichereinheiten 2, 3, 4, ihrer Leistungselektronikmodule 23, 33, 43; 34, 44, 46 und der daran angeschlossenen Speicherelemente 20, 30, 40. Bei hohem Gesamtenergieniveau des Energiespeichersystems 1 werden daher in einem weiteren Schritt zur Erhöhung der Verluste im Energiespeichersystem 1 inaktive Hilfsaggregate der Speichereinheiten 2, 3, 4 zugeschaltet oder es wird die Leistungsaufnahme bereits aktivierter Hilfsaggregate erhöht.

Bei niedrigem Gesamtenergieniveau des Energiespeichersystems 1 werden dagegen die Verluste im Energiespeichersystem 1 verringert und im Extremfall minimiert, aber auch das Energieniveau der einzelnen Speichereinheiten 2, 3, 4 unter Berücksichtigung deren Speichertechnologie bei potentiell möglicher Leistungsaufnahme aus dem Energieversorgungsnetz 11 durch eine entsprechende Steuerung und Verteilung der Energieaufnahme auf die Speichereinheiten 2, 3, 4 durch das Energiespeichersystem-Management 8 optimiert.

In einem ersten Schritt wird die Leistungsverteilung auf die Speichereinheiten 2, 3, 4 mittels der Beteiligungsfaktoren $\lambda_N$ zur Ansteuerung der Speichereinheit-Managementsysteme 21, 31, 41 entsprechend den leistungsabhängigen Verlustmodellen so gewählt, dass die leistungsabhängigen Verluste im Energiespeichersystem 1 minimiert werden.

In einem zweiten Schritt werden darüber hinaus einzelne Speichereinheiten 2, 3, 4, die zur Erfüllung der Sollleistung des Energiespeichersystems 1 nicht benötigt werden, stufenweise in einer vorgegebenen Reihenfolge abgeschaltet, wodurch Leerlaufverluste minimiert werden und dadurch der Gesamtwirkungsgrad des Energiespeichersystems 1 erhöht wird.

Zur stufenweisen Abschaltung nicht benötigter Speichereinheiten 2, 3, 4 wird die Pulsweitenmodulation der Leistungselektronikmodule 23, 33, 43 bzw. 34, 44, 46 der zur Erfüllung der Sollleistung des Energiespeichersystems 1 nicht benötigten Speichereinheiten 2, 3, 4 gesperrt oder es werden die zur Erfüllung der Sollleistung des Energiespeichersystems 1 nicht benötigten Speichereinheiten 2, 3, 4 elektrisch vom Kopplungspunkt der Speichereinheiten 2, 3, 4 der internen Sammelschiene oder dem Netzanschlusspunkt 10 des Energieversorgungsnetzes 11 getrennt.

Die vom Energiespeichersystem 1 am Kopplungspunkt bzw. am Netzanschlusspunkt 10 des Energieversorgungsnetzes 11 zu erbringende Sollleistung $P_{soll}$ wird auf die verbleibenden M-Speichereinheiten der insgesamt N Speichereinheiten 2, 3, 4 des Energiespeichersystems 1 entsprechend

$$P_{soll} = \sum_M P_M = \sum_M \lambda_M * P_{soll}$$

verteilt, wobei $P_M$ die von den einzelnen, verbleibenden Speichereinheiten zu erbringenden Teilleistungen und $\lambda_M$ die Beteiligungsfaktoren der zur Erbringung der Sollleistung $P_{soll}$ verbleibenden Speichereinheiten 2, 3, 4 sind. Hierbei berücksichtigt das Energiespeichersystem-Management 8 anhand von Schalthäufigkeit-Alterungsmodellen und deren Auswirkung auf die Lebensdauer die Kosten der Abschaltvorgänge der Speichereinheiten 2, 3, 4 und ihrer jeweiligen einzelnen Komponenten.

Bei niedrigem Gesamtenergieniveau des Energiespeichersystems 1 wird in einem dritten Schritt die Leistungsaufnahme von Hilfsaggregaten als steuerbare Lasten wie Heizungs- und Kühlaggregaten der Speichereinheiten 2, 3, 4 zur Verringerung der Verluste im Energiespeichersystem 1 abgesenkt und in einem vierten Schritt werden die Hilfsaggregate - soweit möglich - abgeschaltet.

Zusätzlich zu extremen, also sehr niedrigen oder sehr hohen Gesamtenergieniveaus des Energiespeichersystems 1 können auch weitere Teilbereiche, insbesondere mittlere Bereiche, des Gesamtenergieniveaus vermieden werden. Solche Teilbereiche können zum Beispiel durch die Art des Anwendungsgebietes des Energiespeichersystems 1, durch die Wirkungsgrade oder die Alterungsmodelle der einzelnen Speichereinheiten 2, 3, 4 bestimmt werden.

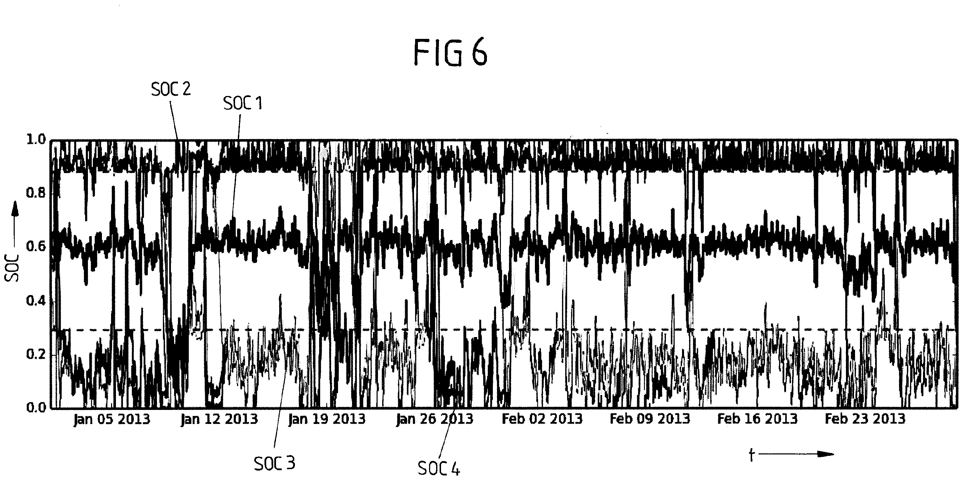

Fig. 6 zeigt in einem Ausführungsbeispiel, bei dem das Energiespeichersystem 1 zur Primärregelung eingesetzt wird, den zeitlichen Verlauf des Ladezustands SOC 1 des in dick ausgezogener Linie dargestellten Energiespeichersystems 1 und den zeitlichen Verlauf des Ladezustands SOC 2, 3, 4 der in dünn ausgezogenen Linien dargestellten einzelnen Speichereinheiten 2, 3, 4 über eine Zeitspanne von mehreren Wochen.

Das Diagramm veranschaulicht, wie ein entsprechend dem erfindungsgemäßen Verfahren aufgestellter Algorithmus den durch gestrichelte Linien begrenzten, ungünstigen Ladezustandsbereich SOC 2, 3, 4 der Speichereinheiten 2, 3, 4, der im dargestellten Diagramm beispielsweise zwischen 25% und 85% der Vollladung liegt, vermieden wird. So verläuft der Ladezustand SOC 2 der Speichereinheit 2 bei täglichen Schwankungen im Mittel im Bereich zwischen 86% und 100%, der Ladezustand SOC 3 der Speichereinheit 3 bei täglichen Schwankungen im Mittel im Bereich zwischen 0% (Entladung) und 25%, während der Ladezustand SOC 4 der Speichereinheit 4 bei täglichen Schwankungen im Mittel sowohl im Bereich zwischen 0% und 25% als auch im Bereich zwischen 85% und 100% verläuft.

Dagegen liegt der Ladezustand SOC 1 des gesamten Energiespeichersystems 1 bei täglichen Schwankungen im Mittel innerhalb des durch die gestrichelten Linien gekennzeichneten Bereichs bei 60% bis 65%, so dass das Energiespeichersystems 1 optimal sowohl auf eine Leistungsabgabe an das Energieversorgungsnetz 11 als auch auf eine Leistungsaufnahme aus dem Energieversorgungsnetz 11 eingestellt ist.

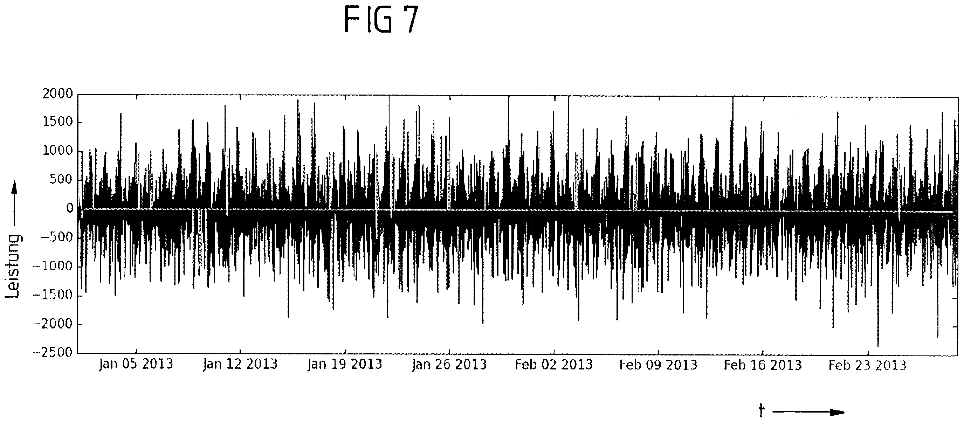

Fig. 7 zeigt ein dem Verlauf des Ladezustands SOC 1 des Energiespeichersystems 1 gemäß Fig. 6 entsprechendes Leistungsprofil mit um die Nulllinie schwankender Abgabe elektrischer Leistung (in kW) des zur Primärregelung eingesetzten Energiespeichersystems 1 an das Energieversorgungsnetz 11 bzw. Aufnahme elektrischer Leistung (in kW) des Energiespeichersystems 1 aus dem Energieversorgungsnetz 11.

## Bezugszeichenliste

| | |
|---|---|
| 1 | Energiespeichersystem |
| 2, 3, 4 | Speichereinheiten |
| 8 | Energiespeichersystem-Management |
| 9 | Netzanschluss-Leistungsschalter |
| 10 | Netzanschlusspunkt |
| 11 | Energieversorgungsnetz |

| | |
|---|---|
| 20, 30, 40 | Speicherelemente |
| 21, 31, 41 | Speichereinheit-Managementsystem |
| 22, 32, 42 | Leistungselektronikregler |
| 23, 33, 43 | Wechselrichter |
| 25, 35, 45 | Kommunikationsleitungen |
| 34, 44, 46 | Hochsetzsteller |
| 51, 52, 53 | Transformator |
| 61, 62, 63 | Leistungsschalter |
| 71, 72, 73 | Kommunikationsleitungen |
| 74 - 78 | Steuerleitungen |
| 200, 300, 400 | Speicherelement-Managementsystem |
| M | Anzahl der verbleibenden Speichereinheiten |
| N | Anzahl der Speichereinheiten |
| $P_M$ | Teilleistungen verbleibender Speichereinheiten |
| $P_N$ | Leistungsanteile |
| $P_{soll}$ | Sollleistung |
| $\lambda_M$ | Beteiligungsfaktoren verbleibender Speichereinheiten |
| $\lambda_1$ bis $\lambda_N$ | Beteiligungsfaktoren |
| PCC | Kopplungspunkt |
| SOC | Ladezustand |

## Patentansprüche

**1.** Verfahren zum Betrieb eines elektrischen Energiespeichersystems (1), das zur Bereitstellung einer Sollleistung ($P_{soll}$) mit einem elektrischen Energieversorgungsnetz (11) verbunden ist und mehrere elektrisch an einem gemeinsamen Kopplungspunkt (PCC) verbundene Speichereinheiten (2, 3, 4) enthält, auf die die Sollleistung ($P_{soll}$) verteilt wird, und der Gesamtwirkungsgrad des Energiespeichersystems (1) durch Einstellung einzelner, von den Speichereinheiten (2, 3, 4) bereitzustellender Leistungsanteile ($P_N$) an die Sollleistung ($P_{soll}$) angepasst wird,
**dadurch gekennzeichnet,**
**dass** die Sollleistung ($P_{soll}$) auf die mehreren (N) Speichereinheiten (2, 3, 4) derart verteilt wird, dass die im Energiespeichersystem (1) auftretenden Verluste bei niedrigem Gesamtenergieniveau des Energiespeichersystems (1) verringert und bei hohem Gesamtenergieniveau des Energiespeichersystems (1) erhöht werden.

**2.** Verfahren nach Anspruch 1, **dadurch gekennzeichnet, dass** die Sollleistung ($P_{soll}$) auf die Speichereinheiten (2, 3, 4) in Abhängigkeit von

    - dem Gesamtenergieniveau des Energiespeichersystems (1),
    - der Sollleistung ($P_{soll}$) und
    - dem Wirkungsgrad und charakteristischen Eigenschaften der Speichereinheiten (2, 3, 4)

verteilt wird.

3. Verfahren nach Anspruch 1 oder 2, **dadurch gekennzeichnet, dass** die Sollleistung ($P_{soll}$) auf die Speichereinheiten (2, 3, 4) in Abhängigkeit von

   - den Kosten der Leistungselektronikmodule (23, 33, 43; 34, 44, 46) und Speicherelemente (20, 30, 40) der Speichereinheiten (2, 3, 4) und/oder
   - der Lebensdauererwartung der Leistungselektronikmodule (23, 33, 43; 34, 44, 46) und Speicherelemente (20, 30, 40) der Speichereinheiten (2, 3, 4)

   verteilt wird.

4. Verfahren nach mindestens einem der vorangehenden Ansprüche, **dadurch gekennzeichnet, dass** die Sollleistung ($P_{soll}$) derart auf die Speichereinheiten (2, 3, 4) verteilt wird, dass das Energieniveau des Energiespeichersystems (1) innerhalb des energetisch verfügbaren Bereichs minimale Werte nicht unterschreitet und maximale Werte nicht überschreitet.

5. Verfahren nach mindestens einem der vorangehenden Ansprüche, **dadurch gekennzeichnet, dass** die Sollleistung ($P_{soll}$) derart auf die Speichereinheiten (2, 3, 4) verteilt wird, dass bezüglich der charakteristischen Eigenschaften der Speichereinheiten (2, 3, 4) ungünstige Energieniveaus der Speichereinheiten (2, 3, 4) vermieden werden.

6. Verfahren nach mindestens einem der vorangehenden Ansprüche, **dadurch gekennzeichnet, dass** bei Vorgabe

   - des vom Energieversorgungsnetz zur Verfügung gestellten energetisch verfügbaren Bereichs,
   - der Topologie der Speichereinheiten (2, 3, 4) und der Speichertechnologie der Speicherelemente (20, 30, 40) der Speichereinheiten (2, 3, 4) und
   - der Kosten der Leistungselektronikmodule (23, 33, 43; 34, 44, 46) und Speicherelemente (20, 30, 40) der Speichereinheiten (2, 3, 4)
   eine
   - das momentane Gesamtenergieniveau des Energiespeichersystems (1) und die Lebensdauererwartung der Leistungselektronikmodule (23, 33, 43; 34, 44, 46) und Speicherelemente (20, 30, 40) der Speichereinheiten (2, 3, 4)

   optimierende Strategie bei der Verteilung der Sollleistung ($P_{soll}$) auf die Speichereinheiten (2, 3, 4) gewählt wird.

7. Verfahren nach mindestens einem der vorangehenden Ansprüche, **dadurch gekennzeichnet, dass** die Sollleistung ($P_{soll}$) auf N Speichereinheiten (2, 3, 4) durch eine Vorgabe absoluter, von den Speichereinheiten (2, 3, 4) zu erbringender Leistungsanteile ($P_N$) der Sollleistung ($P_{soll}$) derart verteilt wird, dass die Summe aller absoluten Leistungsanteile ($P_N$) der Speichereinheiten (2, 3, 4) gleich der Sollleistung ($P_{soll}$) ist entsprechend

$$P_{soll} = \sum_N P_N$$

8. Verfahren nach mindestens einem der Ansprüche 1 bis 5, **dadurch gekennzeichnet, dass** die Sollleistung ($P_{soll}$) auf N Speichereinheiten (2, 3, 4) durch eine Vorgabe relativer Beteiligungsfaktoren ($\lambda_1$ bis $\lambda_N$) für die Speichereinheiten (2, 3, 4) entsprechend

$$P_{soll} = \sum_N \lambda_N * P_{soll}V$$

verteilt wird, wobei die Beteiligungsfaktoren ($\lambda_1$ bis $\lambda_N$) positiv sind und die Summe aller Beteiligungsfaktoren ($\lambda_1$ bis $\lambda_N$)

$$\sum_N \lambda_N = 1$$

9. Verfahren nach Anspruch 8, **dadurch gekennzeichnet, dass** der Gesamtbereich möglicher Energieniveaus des Energiespeichersystems (1) in drei Bereiche ($S_1 < S_0 < S_4$) aufgeteilt wird, von denen ein erster Bereich ($S_0$) der angestrebte Bereich, ein zweiter Bereich ($S_1$) ein Bereich niedrigen Gesamtenergieniveaus und ein dritter Bereich ($S_4$) ein Bereich hohen Gesamtenergieniveaus des Energiespeichersystems (1) ist, wobei im ersten Bereich ($S_0$) der Gesamtwirkungsgrad des Energiespeichersystems (1) nicht beeinflusst wird, im zweiten Bereich ($S_1$) die Beteiligungsfaktoren ($\lambda_1$ bis $\lambda_N$) dynamisch so angepasst werden, dass die Verluste des Energiespeichersystems (1) minimiert und der Gesamtwirkungsgrad des Energiespeichersystems (1) maximiert wird und im dritten Bereich ($S_4$) die Beteiligungsfaktoren ($\lambda_1$ bis $\lambda_N$) dynamisch so angepasst werden, dass die Verluste maximiert und der Gesamtwirkungsgrad des Energiespeichersystems (1) minimiert wird.

10. Verfahren nach mindestens einem der vorangehenden Ansprüche, **dadurch gekennzeichnet, dass** zur Verringerung der Verluste im Energiespeichersystem (1) die Leistungsaufnahme von Hilfsaggregaten der Speichereinheiten (2, 3, 4) abgesenkt oder die Hilfsaggregate abgeschaltet werden, und dass zur Erhöhung der Verluste im Energiespeichersystem (1) inaktive Hilfsaggregate der Speichereinheiten (2, 3, 4) zugeschaltet werden oder die Leistungsaufnahme von Hilfsaggregaten erhöht wird.

11. Verfahren nach Anspruch 8, **dadurch gekennzeichnet, dass** der Gesamtbereich möglicher Energieniveaus des Energiespeichersystems (1) in fünf Bereiche ($S_1 < S_2 < S_0 < S_3 < S_4$) aufgeteilt wird, von denen der erste Bereich ($S_0$) der angestrebte Bereich, der zweite Bereich ($S_1$) ein Bereich niedrigen Gesamtenergieniveaus ist, in dem die Beteiligungsfaktoren ($\lambda_1$ bis $\lambda_N$) dynamisch so angepasst werden, dass die Verluste des Energiespeichersystems (1) minimiert und der Gesamtwirkungsgrad des Energiespeichersystems (1) maximiert wird, der dritte Bereich ($S_4$) ein Bereich hohen Gesamtenergieniveaus des Energiespeichersystems (1) ist, in dem die Beteiligungsfaktoren ($\lambda_1$ bis $\lambda_N$) dynamisch so angepasst werden, dass die Verluste maximiert und der Gesamtwirkungsgrad des Energiespeichersystems (1) minimiert wird und in dem vierten Bereich ($S_2$) und fünften Bereich ($S_3$) ein gradueller Abfall des Gesamtwirkungsgrades erfolgt.

12. Verfahren nach mindestens einem der vorangehenden Ansprüche, **dadurch gekennzeichnet, dass** zur Verringerung der Verluste im Energiespeichersystem (1) Energie zwischen den Speichereinheiten (2, 3, 4) des Energiespeichersystems (1) ausgetauscht wird wenn das Gesamtenergieniveau des Energiespeichersystems (1) oberhalb eines vorgegebenen Wertes liegt.

13. Verfahren nach mindestens einem der vorangehenden Ansprüche, **dadurch gekennzeichnet, dass** zur Verringerung der Verluste im Energiespeichersystem (1) Energie zwischen den Speichereinheiten (2, 3, 4) des Energiespeichersystems (1) ausgetauscht wird, wenn sich das Energieniveau einer Speichereinheit (2, 3, 4) in einem bezüglich der charakteristischen Eigenschaften der betreffenden Speichereinheit (2, 3, 4) zu vermeidenden Bereich befindet oder sich diesem Bereich annähert.

14. Verfahren nach Anspruch 11 oder 12, **dadurch gekennzeichnet, dass** den Speichereinheiten (2, 3, 4) sowohl positive als auch negative Beteiligungsfaktoren ($\lambda_1$ bis $\lambda_N$) zugeordnet werden, die bezüglich einzelner Speichereinheiten (2, 3, 4) auch größer eins sein können und innerhalb des Energiespeichersystems (1) zu eins summieren, wobei mit den Speicherelementen (20, 30, 40) verbundene Leistungselektronikmodule (23, 33, 34, 43, 44, 45) der zur Erfüllung der Sollleistung ($P_{soll}$) des Energiespeichersystems (1) nicht benötigten Speichereinheiten (2, 3, 4) gesperrt oder die zur Erfüllung der Sollleistung ($P_{soll}$) des Energiespeichersystems (1) nicht benötigten Speichereinheiten (2, 3, 4) elektrisch vom Kopplungspunkt (PCC) oder einer die Speichereinheiten (2, 3, 4) verbindenden Sammelschiene getrennt werden.

15. Verfahren nach Anspruch 14, **dadurch gekennzeichnet, dass** die bei niedrigem Gesamtenergieniveau des Energiespeichersystems (1) zur Erbringung der Sollleistung ($P_{soll}$) des Energiespeichersystems (1) nicht benötigten Speichereinheiten (2, 3, 4) in einer vorgegebenen Reihenfolge abgeschaltet werden und die vom Energiespeichersystem (1) am Kopplungspunkt (PCC) zu erbringende Sollleistung ($P_{soll}$) auf die verbleibenden M-Speichereinheiten (2, 3, 4) der insgesamt N-Speichereinheiten (2, 3, 4) des Energiespeichersystems (1) entsprechend

$$P_{soll} = \sum_M P_M = \sum_M \lambda_M * P_{soll}$$

verteilt wird, wobei $P_M$ die von den einzelnen, verbleibenden Speichereinheiten (2, 3, 4) zu erbringenden Teilleistungen und $\lambda_M$ die Beteiligungsfaktoren der zur Erbringung der Sollleistung ($P_{soll}$) verbleibenden Speichereinheiten (2, 3, 4) sind.

16. Vorrichtung angepasst zur Durchführung des Verfahrens nach mindestens einem der vorangehenden Ansprüche, **dadurch gekennzeichnet, dass** das Energiespeichersystem (1) mindestens zwei Speichereinheiten (2, 3, 4) aufweist, wobei jede Speichereinheit (2, 3, 4)

- zumindest gruppenweise zusammengefasst gleiche chemische und/oder physikalische Eigenschaften aufweisende Speicherelemente (20, 30, 40),
- ein die Speicherelemente (20, 30, 40) steuerndes und überwachendes Speicherelement-Managementsystem (200, 300, 400)
- ein die Speichereinheiten (2, 3, 4) steuerndes und überwachendes Speichereinheiten-Managementsystem (21, 31, 41),
- ein Leistungselektronikmodul (23, 33, 34, 43, 44, 46) und
- eine Leistungselektronikmodul-Regeleinrichtung

enthält und dass die Speicherelement-Managementsysteme (200, 300, 400) der Speichereinheiten (2, 3, 4) mit einem die Bereitstellung der Sollleistung ($P_{soll}$) am Kopplungspunkt (PCC) und dem Gesamtwirkungsgrad des Energiespeichersystem (1) steuernden und überwachenden übergeordneten Energiespeichersystem-Management (8) verbunden sind.

**17.** Vorrichtung nach Anspruch 16, **dadurch gekennzeichnet, dass** die Leistungselektronikmodule (23, 33, 34, 43, 44, 46) aus mindestens einem an die Speicherelemente (20, 30, 40) angeschlossenen Hochsetzsteller (34, 44, 46) und einem gleichstromseitig an den oder die Hochsetzsteller (34, 44, 46) und wechselstromseitig unmittelbar oder über einen Mittelspannungstransformator an eine Sammelschiene oder den Netzanschlusspunkt (10) angeschlossenen Wechselrichter (23, 33, 34) bestehen, die gruppenweise parallel geschalteten Speicherelemente (20, 30, 40) über einen jeder Gruppe zugeordneten Hochsetzsteller (34, 44, 46) mit einem Wechselrichter (23, 33, 34) und als Mittelspannungsbatterien ausgebildet sind und über das Leistungselektronikmodul (23, 33, 34, 43, 44, 46) und einen Mittelspannungs-Leistungsschalter mit der Sammelschiene oder dem Netzanschlusspunkt (10) und mit jeweils einem Wechselrichter (23, 33, 34) verbunden sind, die an die Primärwicklungen eines sekundärseitig mit der Sammelschiene oder einem Netzanschlusspunkt (10) verbundenen Dreiwicklungstransformator angeschlossen sind.

**Claims**

**1.** A method for operating an electrical energy storage system (1), which is connected to an electrical energy supply grid (11) for providing a setpoint power ($P_{set}$) and contains a plurality of storage units (2, 3, 4) connected electrically to a point of common coupling (PCC), with the setpoint power ($P_{set}$) being distributed among said storage units (2, 3, 4), and the total efficiency of the energy storage system (1) is matched to the setpoint power ($P_{set}$) by adjusting individual power components ($P_N$) to be provided by the storage units (2, 3, 4) **characterized in that** the setpoint power ($P_{set}$) is distributed among the plurality (N) of storage units (2, 3, 4) in such a way that the losses occurring in the energy storage system (1) are reduced in the case of a low total energy level of the energy storage system (1) and increased in the case of a high total energy level of the energy storage system (1).

**2.** The method as claimed in claim 1, **characterized in that** the setpoint power ($P_{set}$) is distributed among the storage units (2, 3, 4) depending on

   - the total energy level of the energy storage system (1),
   - the setpoint power ($P_{set}$) and

the efficiency and characteristic properties of the storage units (2, 3, 4).

**3.** The method as claimed in claim 1 or 2, **characterized in that** the setpoint power ($P_{set}$) is distributed among the storage units (2, 3, 4) depending on

   - the costs of the power electronics modules (23, 33, 43; 34, 44, 46) and storage elements (20, 30, 40) of the storage units (2, 3, 4) and/or
   - the life expectancy of the power electronics modules (23, 33, 43; 34, 44, 46) and storage elements (20, 30, 40) of the storage units (2, 3, 4).

**4.** The method as claimed in at least one of the preceding claims, **characterized in that** the setpoint power ($P_{set}$) is distributed among the storage units (2, 3, 4) in such a way that the energy level of the energy storage system (1) does not fall below minimum values and does not exceed maximum values within the energy-based available range.

**5.** The method as claimed in at least one of the preceding claims, **characterized in that** the setpoint power ($P_{set}$) is distributed among the storage units (2, 3, 4) in such a way that unfavorable energy levels of the storage units (2, 3, 4) as regards the characteristic properties of the storage units (2, 3, 4) are avoided.

**6.** The method as claimed in at least one of the preceding claims, **characterized in that** on presetting

   - of the energy-based available range made available by the energy supply group,
   - of the topology of the storage units (2, 3, 4) and the storage technology of the storage elements (20, 30, 40) of the storage units (2, 3, 4) and
   - of the costs of the power electronics modules (23, 33, 43; 34, 44, 46) and storage elements (20, 30, 40) of the storage units (2, 3, 4),

a strategy which optimizes

   - the instantaneous total energy level of the energy storage system (1) and the life expectancy of the power electronics modules (23, 33, 43; 34, 44, 46) and storage elements (20, 30, 40) of the storage units (2, 3, 4)

for the distribution of the setpoint power ($P_{set}$) among the storage units (2, 3, 4) is selected.

**7.** The method as claimed in at least one of the preceding claims, **characterized in that** the setpoint power ($P_{set}$) is distributed among N storage units (2, 3, 4) by presetting of absolute power components ($P_N$) of the setpoint power ($P_{set}$) to be produced by the storage elements (2, 3, 4) in such a way that the sum of all of the absolute power components ($P_N$) of the storage units (2, 3, 4) is equal to the setpoint power

($P_{set}$), corresponding to

$$P_{set} = \sum_N P_N$$

.

8. The method as claimed in at least one of the claims 1 to 5, **characterized in that** the setpoint power ($P_{set}$) is distributed among the N storage units (2, 3, 4) by presetting of relative contribution factors ($\lambda_1$ to $\lambda_N$) for the storage units (2, 3, 4) corresponding to

$$P_{set} = \sum_N \lambda_N * P_{set} \vee$$

,

wherein the contribution factors ($\lambda_1$ to $\lambda_N$) are positive and the sum of all of the contribution factors ($\lambda_1$ to $\lambda_N$) is

$$\sum_N \lambda_N = 1$$

.

9. The method as claimed in claim 8, **characterized in that** the total range of possible energy levels of the energy storage system (1) is divided into three ranges ($S_1 < S_0 < S_4$), of which a first range ($S_0$) is the desired range, a second range ($S_1$) is a range of low total energy levels and a third range ($S_4$) is a range of high total energy levels of the energy storage system (1), wherein, in the first range ($S_0$), the total efficiency of the energy storage system (1) is uninfluenced, in the section range ($S_1$), the contribution factors ($\lambda_1$ to $\lambda_N$) are matched dynamically in such a way that the losses of the energy storage system (1) are minimized and the total efficiency of the energy storage system (1) is maximized, and, in a third range ($S_4$), the contribution factors ($\lambda_1$ to $\lambda_N$) are matched dynamically in such a way that the losses are maximized and the total efficiency of the energy storage system (1) is minimized.

10. The method as claimed in at least one of the preceding claims, **characterized in that**, in order to reduce the losses in the energy storage system (1), the power consumption of auxiliaries of the storage units (2, 3, 4) is reduced or the auxiliaries are disconnected, and **in that**, in order to increase the losses in the energy storage system (1), the active auxiliaries of the storage units (2, 3, 4) are connected or the power consumption of auxiliaries is increased.

11. The method as claimed in claim 8, **characterized in that** the total range of possible energy levels of the energy storage system (1) is divided into five ranges ($S_1 < S_2 < S_0 < S_3 < S_4$), of which the first range ($S_0$) is the desired range, the second range ($S_1$) is a range of low total energy levels in which the contribution factors ($\lambda_1$ to $\lambda_N$) are matched dynamically in such a way that the losses of the energy storage system (1) are minimized and the total efficiency of the energy storage system (1) is maximized, the third range ($S_4$) is a range of high total energy levels of the energy storage system (1) in which the contribution factors ($\lambda_1$ to $\lambda_N$) are matched dynamically in such a way that the losses are maximized and the total efficiency of the energy storage system (1) is minimized and there is a gradual drop in the total efficiency in the fourth range ($S_2$) and fifth range ($S_3$).

12. The method as claimed in at least one of the preceding claims, **characterized in that**, in order to reduce the losses in the energy storage system (1), energy is exchanged between the storage units (2, 3, 4) of the energy storage system (1) when the total energy level of the energy storage system (1) is above a preset value.

13. The method as claimed in at least one of the preceding claims, **characterized in that**, in order to reduce the losses in the energy storage system (1), energy is exchanged between the storage units (2, 3, 4) of the energy storage system (1) when the energy level of a storage unit (2, 3, 4) is in a range which is to be avoided in respect of the characteristic properties of the relevant storage unit (2, 3, 4) or comes close to this range.

14. The method as claimed in claim 11 or 12, **characterized in that** both positive and negative contribution factors ($\lambda_1$ to $\lambda_N$) are assigned to the storage units (2, 3, 4), which contribution factors can also be greater than one with respect to individual storage units (2, 3, 4) and can add up to one within the energy storage system (1), wherein power electronics modules (23, 33, 34, 43, 44, 45) connected to the storage elements (20, 30, 40) of the storage units (2, 3, 4) which are not required for fulfilling the setpoint power ($P_{set}$) of the energy storage system (1) are turned off or the storage units (2, 3, 4) which are not required for fulfilling the setpoint power ($P_{set}$) of the energy storage system (1) are disconnected electrically from the point of coupling (PCC) or a busbar connecting the storage elements (2, 3, 4).

15. The method as claimed in claim 14, **characterized in that** the storage units (2, 3, 4) which are not required for fulfilling the setpoint power ($P_{set}$) of the energy storage system (1) at the low total energy level of the energy storage system (1) are disconnected in a preset sequence and the setpoint power ($P_{set}$) to be produced by the energy storage system (1) at the point of coupling (PCC) is distributed among the remaining M storage units (2, 3, 4) of the in total N storage units (2, 3, 4) of the energy storage system (1) corresponding to

$$P_{set} = \sum_M P_M = \sum_M \lambda_M * P_{set}$$ ,

wherein $P_M$ is the partial powers to be produced by the individual remaining storage units (2, 3, 4), and $\lambda_M$ are the contribution factors of the storage units (2, 3, 4) remaining for producing the setpoint power ($P_{get}$).

16. An apparatus adapted for implementing the method as claimed in at least one of the preceding claims, **characterized in that** the energy storage system (1) has at least two storage units (2, 3, 4), wherein each storage unit (2, 3, 4) contains

- storage elements (20, 30, 40) having at least groupwise combined identical chemical and/or physical properties,
- a storage element management system (200, 300, 400) which controls and monitors the storage elements (20, 30, 40),
- a storage unit management system (21, 31, 41), which controls and monitors the storage units (2, 3, 4),
- a power electronics module (23, 33, 34, 43, 44, 46), and
- a power electronics module regulation device,

and **in that** the storage element management systems (200, 300, 400) of the storage units (2, 3, 4) are connected to a superordinate energy storage system management device (8), which controls and monitors the provision of the setpoint power ($P_{set}$) at the point of coupling (PCC) and the total efficiency of the energy storage system (1).

17. The apparatus as claimed in claim 16, **characterized in that** the power electronics modules (23, 33, 34, 43, 44, 46) consist of at least one step-up converter (34, 44, 46), which is connected to the storage elements (20, 30, 40) and an inverter (23, 33, 34), which is connected on the DC side to the step-up converter(s) (34, 44, 46) and on the AC side directly or via a medium-voltage transformer to a busbar or the grid connection point (10), the storage elements (20, 30, 40) connected groupwise in parallel are connected to an inverter (23, 33, 34) via each group of assigned step-up converters (34, 44, 46) and are in the form of medium-voltage batteries and are connected to the busbar or the grid connection point (10) and to in each case one inverter (23, 33, 34) via the power electronics module (23, 33, 34, 43, 44, 46) and a medium-voltage circuit breaker, wherein the inverters (23, 33, 34) are connected to the primary windings of a three-winding transformer, which is connected on a secondary side to the busbar or a grid connection point (10).

**Revendications**

1. Procédé pour faire fonctionner un système d'accumulation d'énergie électrique (1), qui est relié à un réseau d'alimentation en énergie électrique (11) pour fournir une puissance théorique ($P_{th}$) et contient plusieurs unités d'accumulation (2,3,4) reliées électriquement à un point de couplage commun (PCC) sur lesquelles est répartie la puissance théorique ($P_{th}$) et le rendement du système d'accumulation d'énergie (1) est adapté à la puissance théorique ($P_{th}$) par réglage de parties de puissance ($P_N$) individuelles à fournir par les unités d'accumulation (2,3,4)
**caractérisé en ce que**
la puissance théorique ($P_{th}$) est répartie sur les multiples (N) unités d'accumulation (2,3,4) de telle sorte que les pertes se produisant dans le système d'accumulation d'énergie (1) en cas d'un niveau d'énergie total faible du système d'accumulation d'énergie (1) sont réduites et sont augmentées en cas d'un niveau d'énergie total élevé du système d'accumulation d'énergie (1).

2. Procédé selon la revendication 1 **caractérisé en ce que** la puissance théorique ($P_{th}$) est répartie sur les unités d'accumulation (2,3,4) en fonction

- du niveau d'énergie total du système d'accumulation d'énergie (1),
- de la puissance théorique ($P_{th}$) et
- du rendement et des propriétés caractéristiques des unités d'accumulation (2,3,4).

3. Procédé selon la revendication 1 ou 2 **caractérisé en ce que** la puissance théorique ($P_{th}$) est répartie sur les unités d'accumulation (2,3,4) en fonction

- des coûts des modules électroniques de puissance (23,33,43;34,44;46) et des éléments d'accumulation (20,30,40) des unités d'accumulation (2,3,4) et/ou
- de l'espérance de durée de vie des modules électroniques de puissance (23,33,43 ; 34,34,44,46) et des éléments d'accumulation (20,30,40) des unités d'accumulation (2,3,4).

**4.** Procédé selon au moins l'une quelconque des revendications précédentes **caractérisé en ce que** la puissance théorique ($P_{th}$) est répartie sur les unités d'accumulation (2,3,4) de telle sorte que le niveau d'énergie du système d'accumulation d'énergie (1) ne dépasse pas inférieurement les valeurs minimales à l'intérieur de la gamme énergétiquement disponible et ne dépasse pas les valeurs maximales.

**5.** Procédé selon au moins l'une quelconque des revendications précédentes **caractérisé en ce que** la puissance théorique ($P_{th}$) est répartie sur les unités d'accumulation (2,3,4) de telle sorte que des niveaux d'énergie défavorables des unités d'accumulation (2,3,4) sont évités concernant les propriétés caractéristiques des unités d'accumulation (2,3,4).

**6.** Procédé selon au moins l'une quelconque des revendications précédentes **caractérisé en ce qu'**en cas de spécification

    - de la gamme énergétiquement disponible mise à disposition par le réseau d'alimentation en énergie,
    - de la topologie des unités d'accumulation (2,3,4) et de la technologie d'accumulation des éléments d'accumulation (20,30,40) des unités d'accumulation (2,3,4) et
    - des coûts des modules électroniques de puissance (23,33,43;34,44,46) et des éléments d'accumulation (20,30,40) des unités d'accumulation (2,3,4) une stratégie optimisant
    - le niveau d'énergie total momentané du système d'accumulation d'énergie (1) et l'espérance de durée de vie des modules électroniques de puissance (23,33,43;34,44,46) et des éléments d'accumulation (20,30,40) des unités d'accumulation (2,3,4),

est choisie pour la répartition de la puissance théorique ($P_{th}$) sur les unités d'accumulation (2,3,4) .

**7.** Procédé selon au moins l'une quelconque des revendications précédentes **caractérisé en ce que** la puissance théorique ($P_{th}$) est répartie sur N unités d'accumulation (2,3,4) par une spécification de parties de puissance ($P_N$) absolues de la puissance théorique ($P_{th}$) à fournir par les unités d'accumulation (2,3,4) de telle sorte que la somme de toutes les parties de puissance ($P_N$) absolues des unités d'accumulation (2,3,4) est égale à la puissance théorique ($P_{th}$) correspondant à

$$P_{th} = \sum_N P_N$$

**8.** Procédé selon au moins l'une quelconque des revendications 1 à 5 **caractérisé en ce que** la puissance théorique ($P_{th}$) est répartie sur N unités d'accumulation (2,3,4) par une spécification de facteurs de participation relatifs ($\lambda_1$ à $\lambda_N$) pour les unités d'accumulation (2,3,4) correspondant à

$$P_{th} = \sum_N \lambda_N * P_{th}\vee$$

les facteurs de participation ($\lambda_1$ à $\lambda_N$) étant positifs et la somme de tous les facteurs de participation ($\lambda_1$ à $\lambda_N$)

$$\sum_N \lambda_N = 1$$

**9.** Procédé selon la revendication 8 **caractérisé en ce que** la gamme totale des niveaux d'énergie possibles du système d'accumulation d'énergie (1) est répartie en trois zones ($S_1 < S_0 < S_4$) desquelles une première zone ($S_0$) est la zone souhaitée, une deuxième zone ($S_1$) une zone de niveau d'énergie totale faible et une troisième zone ($S_4$) une zone de niveau d'énergie totale élevé du système d'accumulation d'énergie (1), le rendement total du système d'accumulation d'énergie (1) n'étant pas influencé dans la première zone ($S_0$), les facteurs de participation ($\lambda_1$ à ($\lambda_N$) étant dynamiquement adaptés dans la deuxième zone ($S_1$) de telle sorte que les pertes du système d'accumulation d'énergie (1) sont minimisées et le rendement total du système d'accumulation d'énergie (1) est maximisé et les facteurs de participation ($\lambda_1$ à $\lambda_N$) sont dynamiquement adaptés dans la troisième zone ($S_4$) de telle sorte que les pertes sont maximisées et le rendement total du système d'accumulation d'énergie (1) est minimisé.

**10.** Procédé selon au moins l'une quelconque des revendications précédentes **caractérisé en ce que** pour réduire les pertes dans le système d'accumulation d'énergie (1), la puissance absorbée de groupes auxiliaires des unités d'accumulation (2,3,4) est abaissée ou les groupes auxiliaires inactifs sont déconnectés et **en ce que** pour augmenter les pertes dans le système d'accumulation d'énergie (1) des groupes auxiliaires sont connectés aux unités d'accumulation (2,3,4) ou la puissance absorbée des groupes auxiliaires est augmentée.

**11.** Procédé selon la revendication 8, **caractérisé en ce que** la gamme totale des niveaux d'énergie possibles du système d'accumulation d'énergie (1) est répartie en cinq zones ($S_1 < S_2 < S_0 < S_3 < S_4$), desquelles la première zone ($S_0$) est la zone souhaitée, la deuxième zone ($S_1$) une zone de niveau d'énergie total faible, dans laquelle les facteurs de participation

($\lambda_1$ à $\lambda_N$) sont dynamiquement adaptés de telle sorte que les pertes du système d'accumulation d'énergie (1) sont minimisées et le rendement total du système d'accumulation d'énergie (1) est maximisé, la troisième zone ($S_4$) une zone de niveau d'énergie total élevé du système d'accumulation d'énergie (1), dans laquelle les facteurs de participation ($\lambda_1$ à $\lambda_N$) sont dynamiquement adaptés de telle sorte que les pertes sont maximisées et le rendement du système d'accumulation d'énergie (1) est minimisé et dans la quatrième zone ($S_2$) et la cinquième zone ($S_3$) il se produit une chute graduelle du rendement total.

**12.** Procédé selon au moins l'une quelconque des revendications précédentes **caractérisé en ce que** pour réduire les pertes dans le système d'accumulation d'énergie (1) de l'énergie est échangée entre les unités d'accumulation (2,3,4) du système d'accumulation d'énergie (1) lorsque le niveau d'énergie total du système d'accumulation d'énergie (1) se situe au-dessus d'une valeur préalablement spécifiée.

**13.** Procédé selon au moins l'une quelconque des revendications précédentes **caractérisé en ce que** pour réduire les pertes dans le système d'accumulation d'énergie (1) de l'énergie est échangée entre les unités d'accumulation (2,3,4) du système d'accumulation d'énergie (1) lorsque le niveau d'énergie d'une unité d'accumulation (2,3,4) se trouve dans une zone à éviter concernant les propriétés caractéristiques de l'unité d'accumulation (2,3,4) concernée ou s'approche de cette zone.

**14.** Procédé selon la revendication 11 ou 12 **caractérisé en ce que** des facteurs de participation tant positifs que négatifs ($\lambda_1$ à $\lambda_N$) sont attribués aux unités d'accumulation (2,3,4), qui peuvent être également supérieurs à un concernant les unités d'accumulation individuelles (2,3,4) et totalisent un à l'intérieur du système d'accumulation d'énergie (1), les modules électroniques de puissance (23,33,34,43,44,45) reliés aux éléments d'accumulation (20,30,40) des unités d'accumulation (2,3,4) non nécessaires pour satisfaire à la puissance théorique ($P_{th}$) du système d'accumulation d'énergie (1) étant bloqués ou les unités d'accumulation (2,3,4) non nécessaires pour satisfaire à la puissance théorique ($P_{th}$) du système d'accumulation d'énergie (1) étant électriquement séparées du point de couplage (PCC) ou d'une barre omnibus reliant les unités d'accumulation (2,3,4).

**15.** Procédé selon la revendication 14 **caractérisé en ce que** les unités d'accumulation (2,3,4) non nécessaires pour fournir la puissance théorique ($P_{th}$) du système d'accumulation d'énergie (1) au niveau d'énergie totale faible du système d'accumulation d'énergie (1) sont déconnectées dans un ordre préalablement spécifié et la puissance théorique ($P_{th}$) à

fournir par le système d'accumulation d'énergie (1) au point de couplage (PCC) est répartie sur les unités d'accumulation M (2,3,4) restantes du total des unités d'accumulation N (2,3,4) du système d'accumulation d'énergie (1) selon

$$P_{th} = \sum_M P_M = \sum_M \lambda_M * P_{th}$$

$P_M$ représentant les puissances partielles à fournir par les unités d'accumulation individuelles, restantes (2,3,4) et $\lambda_M$ les facteurs de participation des unités d'accumulation restantes (2,3,4) pour fournir la puissance théorique ($P_{th}$).

**16.** Dispositif adapté pour l'exécution du procédé selon au moins l'une quelconque des revendications précédentes **caractérisé en ce que** le système d'accumulation d'énergie (1) comporte au moins deux unités d'accumulation (2,3,4), chaque unité d'accumulation (2,3,4) contenant

- au moins des éléments d'accumulation (20,30,40) comportant, réunis par groupes, des propriétés chimiques et/ou physiques identiques,
- un système de gestion d'élément d'accumulation (200,300,400) pilotant et contrôlant les éléments d'accumulation (20,30,40),
- un système de gestion des unités d'accumulation (21,31,41) pilotant et contrôlant les unités d'accumulation (2,3,4),
- un module électronique de puissance (23,33,34,43,44,46), et
- un dispositif de régulation de module électronique de puissance

et **en ce que** les systèmes de gestion d'élément d'accumulation (200,300,400) des unités d'accumulation (2,3,4) sont reliés à un système de gestion de système d'accumulation d'énergie (8) supérieur pilotant et contrôlant la fourniture de la puissance théorique ($P_{th}$) au point de couplage (PCC) et le rendement total du système d'accumulation d'énergie (1).

**17.** Dispositif selon la revendication 16, **caractérisé en ce que** les modules électroniques de puissance (23,33,34,43,44,46) sont composés d'au moins un convertisseur élévateur (34,44,46) raccordé aux éléments d'accumulation (20,30,40) et d'un onduleur (23,33,34) raccordé côté courant continu au(x) convertisseur(s) élévateur(s) (34,44,46) et côté courant alternatif directement ou par le biais d'un transformateur de moyenne tension à une barre omnibus ou au point de raccordement de réseau (10), les éléments d'accumulation (20,30,40) montés par groupes en parallèle étant constitués par le biais d'un convertisseur élévateur (34,44,46) attribué à chaque groupe avec un onduleur (23,33,34) et sous la forme de batteries de moyenne tension et étant reliés par le module électronique de puissance (23,33,34,43,44,46) et un interrupteur de puissance de moyenne tension à la barre omnibus ou au point de raccordement de réseau (10) et avec respectivement un onduleur (23,33,34), qui sont raccordés aux enroulements primaires d'un transformateur à trois enroulements relié côté secondaire à la barre omnibus ou à un point de raccordement de réseau (10).

# FIG 1

FIG 2

FIG 3

FIG 4

# FIG 5

FIG 6

## FIG 7

EP 3 149 826 B1